# EUROPEAN PATENT SPECIFICATION

(11) **EP 0 364 042 B1**
(45) Date of publication and mention of the grant of the patent: **29.12.1993**
(21) Application number: 89202541.2
(22) Date of filing: 09.10.1989
(51) Int. Cl.: A01F 15/07

(54) **Apron tensioning system for round balers**
Riemenspannungsvorrichtung für eine Rundballenpresse
Système régulateur de la densité des balles rondes

(30) Priority: 11.10.1988 US 256831
(43) Date of publication of application: 18.04.1990
(73) Proprietor: NEW HOLLAND BELGIUM N.V., B-8210 Zedelgem (BE)
(72) Inventor: Lausch, Nevin H., Denver, PA 17517 (US); Wagstaff, Robert A., Lancaster, PA 17601 (US); Jennings, Richard E., Manheim, PA 17545 (US)
(74) Representative: Vandenbroucke, Alberic

(56) References cited:
- EP-A- 0 076 502
- EP-A- 0 235 356
- FR-A- 2 383 599
- FR-A- 2 541 560

## Description

This invention relates generally to roll baling machines typically referred to as "round balers" which form cylindrical bales of crop material and, in particular, to an apron tensioning system for such machines.

Round balers of the expandable chamber type disclosed in US-A-4.343.141 and US-A-4.426.833 have included a bale forming apron which is maintained under tension during bale formation by utilizing coil springs or air springs. One drawback of the coil springs disclosed in US-A-4.343.141 is that the tension in the apron cannot be quickly and easily released when servicing the baler. Another drawback of these coil springs is that they are bulky and heavy. The air springs disclosed in US-A-4.426.833 overcome these drawbacks but they are costly and require additional frame structure due to the high forces they exert. Furthermore, adjustability of the air springs is limited to decreasing the apron tension only unless an on-board air supply is included.

FR-A-2.383.599 uses a set of two coil springs at each side of the baler with each one of said pairs of springs having a different function. One of these springs is intended to control the apron tension when bale formation is started while the other one of said springs is meant to control the apron tension when bale formation is nearing completion.

In contrast therewith, EP-A-0.076.502 proposes the use of hydraulic resisting means in combination with coil springs for controlling the apron tension. The hydraulic resisting means induce apron tension only when, during operation, crop material is fed into the bale chamber as indeed, the hydraulic system does not urge the apron means toward its bale starting position. Instead, it only provides resistance against the apron means moving away from its bale starting position toward its full sized bale position. This thus implies that, a.o. at the start of the bale formation, the hydraulic resisting means are unable to tension the apron means as is required. Initial apron tension is therefore provided by the spring means.

However, while in EP-A-0.076.502 the effective torques applied by the hydraulic resisting forces initially tend to increase, they decrease during the final portion of the bale formation by virtue of the effective torque arms first being lengthened and subsequently being shortened while the resistance forces themselves remain substantially constant. This is disadvantageous to the extent that maximum apron tension is required for completing a bale in the bale chamber. As to the effective apron tension induced by the spring forces, the effective torque arms of these spring forces initially also are lengthened whereafter they equally are shortened again as the bale being formed reached completion. Simultaneously, the spring forces continue to increase during the entire bale formation cycle so that the effective apron tension induced by the spring forces initially increases rapidly and, towards the end of the bale formation, either increases somewhat slower or remains substantially constant.

It is an object of the present invention to provide an apron tensioning system for round balers which, while permitting easy and accurate control of the apron tension at the various stages of bale formation, provides relatively low apron tension for starting bale formation and relatively high apron tension when bale formation in the bale chamber is nearing completion.

Another object is to provide an apron tensioning system which permits quick and easy release of the tension in the bale forming apron and still another object is to provide an apron tensioning system which permits the tension in the bale forming apron to be increased and decreased without including an on-board air supply.

The present invention provides a system for tensioning bale forming apron means in a round baler. The apron means have an inner course defining, at least in part, a bale forming chamber which, in use, is expandable from a bale starting chamber to a full sized bale chamber. The apron inner course is extensible to accommodate, at least in part, for said bale chamber expansion.

The apron tensioning system according to invention comprises :
- a single take up apparatus which is cooperable with the apron means and movable, during bale formation, from a bale starting position to a full sized bale position for permitting said extension of the apron inner course,
- resisting means which are cooperable with the take up apparatus for, during bale formation, subjecting this apparatus to a resistance torque when moving from the bale starting position to the full sized bale position to thereby induce tension in the apron means; said resisting means including hydraulic cylinder means incorporated in a hydraulic circuitry also comprising adjustable relief valve means, and
- spring means which are cooperable with the take up apparatus for, during bale formation, applying a spring torque thereon which, while permitting said apparatus to move toward the full sized bale position, urges this apparatus toward the bale starting position to thereby induce additional tension in the apron means, and
   the invention is characterized in that, during substantially the entire movement of the take up apparatus from the bale starting position to the full sized bale position :
- the resisting means cooperate with the take up apparatus in a manner so that the resistance torque applied on the take up apparatus and the tension generated thereby in the apron means increase, and
- the spring means cooperate with the take up apparatus in a manner so that the spring torque applied on the take up apparatus and the additional tension generated thereby in the apron means remain substantially constant.

In the preferred embodiment of the invention, the take up apparatus is pivotally mounted on the main frame of the baler to which also a tailgate is pivotally connected. The spring means comprise a pair of springs each having an upper end thereof connected to the take up apparatus and a lower end thereof connected to the tailgate, and the hydraulic cylinder means comprise a pair of hydraulic cylinders each having one end thereof connected to the take up apparatus and another end thereof connected to the tailgate. One of the springs and one of the hydraulic cylinders are disposed on each side of the baler. The resisting means provide a primary source of tension on the apron means while the resilient means provide a secondary source of tension on the apron means.

The arrangement of the present invention is such that, during substantially the entire pivotal movement of the take up apparatus from its bale starting position to its full sized bale position :
- the effective torque arm of the spring force applied by each spring on said take up apparatus shortens and the spring force itself increases in a manner so that the counteracting effects thereof substantially compensate each other whereby the effective spring torque applied by each said spring on the take up apparatus remains substantially constant during bale formation, and
- the effective torque arm of the resistance applied by each hydraulic cylinder on said take up apparatus lengthens while the resistance itself remains substantially constant whereby the effective resistance torque applied by each said hydraulic cylinder on the take up apparatus increases during bale formation.

A round baler embodying the present invention will now be described in greater detail by way of example with reference to the accompanying drawings, in which :
Fig. 1 is a side elevational view of this round baler at the start of bale formation; and
Fig. 2 is another side elevational view of the round baler of Fig. 1 at the completion of bale formation.

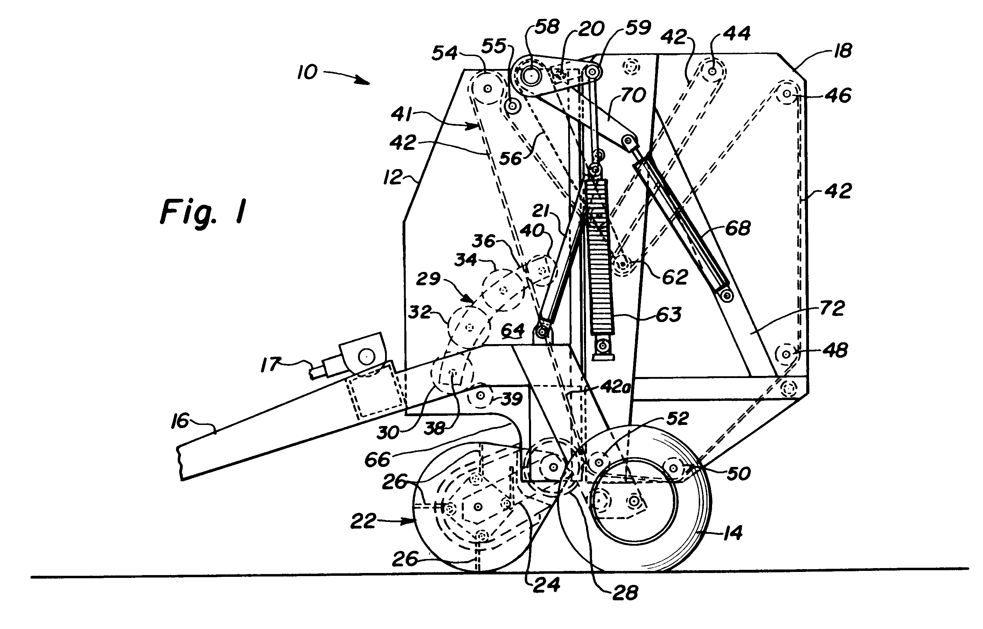

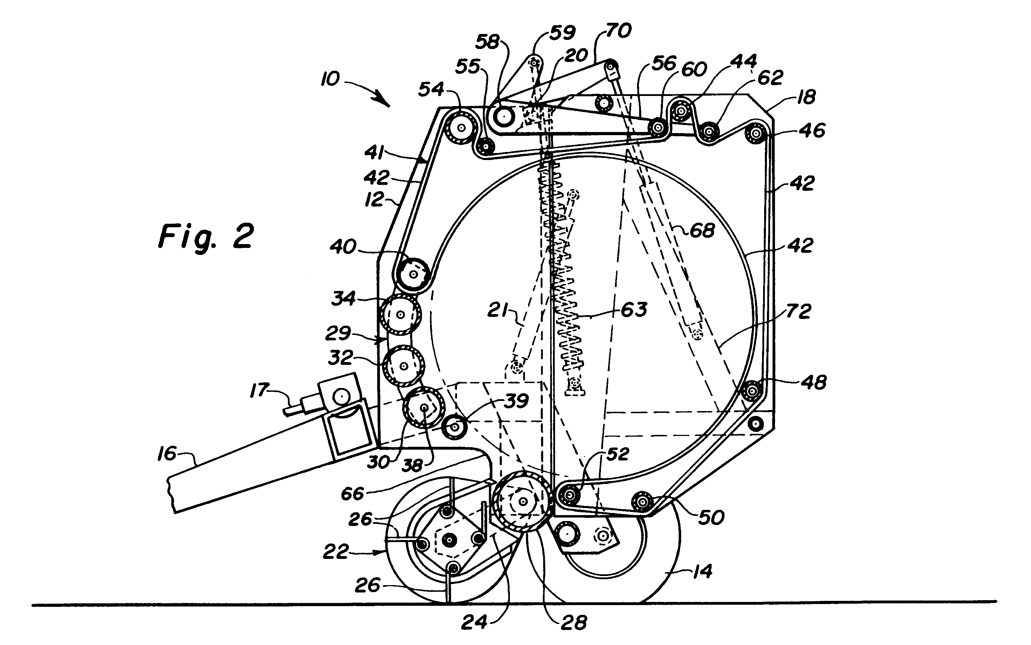

Referring to Figs. 1 and 2, a round baler 10 according to the preferred embodiment of the present invention includes a main frame 12 supported by a pair of wheels 14. A tongue 16 is provided on the forward portion of the main frame 12 for connection to a tractor (not shown). A tailgate 18 is pivotally connected to the main frame 12 by stub shafts 20 so that the tailgate 18 may be closed as shown in Fig. 1 during bale formation and opened to eject a completed bale. A pair of hydraulic cylinders 21 is connected between the main frame 12 and the tailgate 18 to open and close the tailgate 18. A conventional pickup 22 is mounted on the main frame 12 by a pair of brackets 24 and is supported by a pair of wheels (not shown). The pickup 22 includes a plurality of fingers or tines 26 movable in a predetermined path to lift crop material from the ground and deliver it rearwardly toward a floor roll 28 which is rotatably mounted on the main frame 12.

A sledge assembly 29 includes a plurality of rollers 30, 32, 34 extending transversely of the main frame 12 in an arcuate arrangement and journalled at the ends thereof in a pair of arcuately shaped arms 36. The arms 36 are pivotally mounted inside the main frame 12 on stub shafts 38 for permitting movement of the sledge assembly 29 between a bale starting position shown in Fig. 1 and a full bale position shown in Fig. 2. The rollers 30, 32, 34 are driven in a clockwise direction as indicated in Fig. 1 by conventional means (for example, chains and sprockets or gears) connected with a drive shaft 17 which is adapted for connection to the PTO of a tractor (not shown). A stripper roll 39 is located adjacent roller 30 and is driven in a clockwise direction, as viewed in Fig. 1, to strip crop material from the roller 30. An idler roller 40 is carried by the arms 36 for movement in an arcuate path when the sledge assembly 29 moves between its bale starting and full bale positions. The idler roller 40 is freely rotatable.

An apron 41 includes a plurality of belts 42 supported on guide rolls 44, 46, 48, 50, 52 which are rotatably mounted in the tailgate 18 and on a drive roll 54 which is rotatably mounted in the main frame 12. Although the belts 42 pass between the roller 34 and the idler roller 40, they are in engagement with only the idler roller 40 but the roller 34 is located in close proximity to the belts 42 to strip crop material from the belts 42.

When the round baler 10 is in the condition shown in Fig. 1 with the tailgate 18 closed, an inner course 42a of the apron belts 42 extending between the guide roll 52 and the idler roller 40 cooperates with the rollers 30, 32, 34 of the sledge assembly 29 to define a bale starting chamber 64. The apron inner course 42a forms a rear wall of the chamber 64 while the rollers 30, 32, 34 form a front wall of the chamber 64. The floor roll 28 is disposed in the bottom of the chamber 64 between the front and rear walls thereof. The roller 30 is spaced from the floor roll 28 to form a throat or inlet 66 for the chamber 64.

Further conventional means (not shown) are connected with the drive shaft 17 to provide rotation of the drive roll 54 for causing movement of the belts 42 along the path indicated in Fig. 1 and in the direction such that the inner course 42a is moving upwardly when starting a bale. An additional guide roll 55 in the main frame 12 ensures proper driving engagement between the belts 42 and the drive roll 54. A pair of take up arms 56 is pivotally mounted on the main frame 12 by a cross shaft 58 for movement between inner and outer positions shown in Figs. 1 and 2, respectively. These take up arms 56 carry additional guide rolls 60 and 62 for the belts 42. Resilient means such as a pair of springs 63 are provided to normally urge the arms 56 toward their inner positions. These springs 63 are connected at their upper ends to levers 59 which are mounted on the cross shaft 58 and at their lower ends to the tailgate 18.

As the round baler 10 is towed across a field by a tractor (not shown), the pickup tines 26 lift crop material from the ground and feed it into the bale starting chamber 64 via the throat 66. The crop material is carried rearwardly by the floor roll 28 into engagement with the apron inner course 42a which carries it upwardly and forwardly into engagement with the rollers 34, 32, 30. The crop material is coiled in a counterclockwise direction as viewed in Fig. 1 to start a bale core. Continued feeding of crop material into the chamber 64 by the pickup tines 26 causes the apron inner course 42a of the belts 42 to expand in length around a portion of the bale core as the diameter thereof increases. The take up arms 56 rotate from their inner position shown in Fig. 1 toward their outer position shown in Fig. 2 to permit such expansion of the apron inner course 42a. When a full sized bale has been formed as shown in Fig. 2 and then wrapped with a suitable material such as twine or net, the tailgate 18 is opened by extending the hydraulic cylinders 21 and the bale is ejected. Subsequent closing of the tailgate 18 returns the apron inner course 42a to the location shown in Fig. 1 since the arms 56 are returned to their inner positions shown in Fig. 1 by the springs 63. The round baler 10 is now ready to form another bale.

It will be understood that during formation of the bale, the sledge assembly 29 moves from its bale starting position of Fig. 1 to its full bale position of Fig. 2. This movement of the sledge assembly 29 causes the idler roller 40 to move in an arcuate path while maintaining the apron belts 42 in close proximity to the roller 34, thereby allowing the roller 34 to strip crop material from the apron belts 42. The idler roller 40 thus prevents the loss of crop material between the roller 34 and the belts 42 during formation of the bale. The sledge assembly 29 is pushed outwardly toward its full bale position during bale formation and is pulled inwardly toward its bale starting position during bale ejection without utilizing any additional mechanisms.

In an alternative embodiment (not shown) of the round baler 10, the apron 41 consists of a pair of chains connected together at spaced intervals by transverse slats, and the idler roller 40 is replaced by a pair of idler sprockets engaged with the chains. Also in this alternative embodiment, the guide rolls 44, 46, 48, 50, 52, 55, 60 and 62 are replaced with guide sprockets for engaging the apron chains, and the drive roll 54 is replaced with drive sprockets.

In accordance with the present invention, a pair of hydraulic cylinders 68 is pivotally connected at their ends between lever arms 70 which are mounted on the cross shaft 58 and frame members 72 on the tailgate 18. The hydraulic cylinders 68 are preferably of the double acting type. One of the springs 63 and one of the hydraulic cylinders 68 are disposed on each side of the baler 10.

As seen in Fig. 1, the longitudinal axes of the hydraulic cylinders 68 are inclined at an acute angle of approximately 30° relative to the longitudinal axes of the springs 63 at the start of bale formation. This angle of inclination between the cylinders 68 and the springs 63 decreases to approximately 10° as seen in Fig. 2 when a full bale has been completed. It further also will be seen in Figures 1 and 2 that the lever arms 59 and 70 equally are inclined at an acute angle of approximately 30° relative to each other.

During bale formation, the hydraulic cylinders 68 and the springs 63 are extended in order to resist movement of the arms 56 from the inner positions shown in Fig. 1 to the outer positions shown in Fig. 2. This maintains tension in the apron 41 and thereby controls the density of bales formed in the baler 10.

It will be appreciated from a careful analysis of the drawings that, in the empty condition of the baler 10 (Fig. 1), the lever arms 59 and the longitudinal axes of the springs 63 extend generally perpendicularly to each other and, when a full sized bale is formed in the bale chamber (Fig. 2), these arms 59 and longitudinal axes of the springs 63 define an acute angle therebetween whereby, during bale formation, the effective torque arms of the spring forces gradually are shortened while the spring forces themselves increase. These counteracting effects tend to compensate each other more or less so that the effective torques applied by the springs 63 on the take up arms 56 remain substantially constant during bale formation.

The hydraulic cylinders 68 are included in a hydraulic system further also comprising an adjustable relief valve (not shown) in the hydraulic circuitry between the plunger sides of the cylinders 68 and a pressure fluid reservoir (not shown). The cylinder sides of the hydraulic cylinders 68 are coupled both via a by-pass and incorporated check valve to the plunger sides thereof and via further hydraulic fluid supply lines to said reservoir. Said hydraulic circuitry may include a shut off valve for enabling interruption of the drainage of pressure fluid from the cylinder sides of the hydraulic cylinders 68. The purpose of this shut off valve will become clear furtheron in the description.

The arrangement of the hydraulic apron tension control system is such that extension of the hydraulic cylinders 68 and thus also outward movement of the take up arms 56, is opposed by a predetermined resistance which is adjustable by means of said relief valve. This resistance remains constant during the entire bale formation. Having said this, it further also may be derived from the drawings that the relative positioning of the lever arms 70 and the hydraulic cylinders 68 is such that the effective torque arms of the hydraulic resistance forces increase during bale formation whereby the effective torques applied by the hydraulic cylinders 68 on the take up arms 56 increase which is desirable as the tension in the belts 42 should increase together with the increasing diameter of a bale being formed in the bale chamber to thereby ensure that this bale has the desired density throughout.

In summary, the hydraulic apron tension control system described hereabove in effect is formed by resisting means which, during bale formation, resist movement of the apron take up means toward the full sized bale position.

It will be understood that the springs 63 and the hydraulic cylinders 68 cooperate to comprise apron tensioning means according to the present invention. The hydraulic cylinders 68 provide a primary source of tension on the apron 41 while the springs 63 provide a secondary source of tension on the apron 41 and assist the cylinders 68 during formation of the bale core and during the final stages of bale formation. As already explained, the apron tension generated by the hydraulic cylinders 68 increases during bale formation while the apron tension generated by the springs 63 remains substantially constant during bale formation. The apron tension generated by the springs 63 is relatively small but yet sufficient so that a core of sufficient density may be formed. At the start of the bale formation, the hydraulic tensioning means provide virtually no apron tension whereby the loads on the apron are relatively small, which is of course desirable from the viewpoint of wear and tear. On the other hand, when a bale grows in the bale chamber toward a full size bale, increased apron tension is needed to produce adequate bale density. This increased apron tension is generated mainly by the hydraulic apron tensioning system as already described. Thus, increased apron tension is generated only when required.

In summary, this cooperation between the springs 63 and the hydraulic cylinders 68 ensures that bales formed in the baler 10 have dense cores and hard outer shells. Such bales are preferred because the dense cores prevent bales from sagging or squatting after formation and the hard outer shells help to shed water and thus prevent it from penetrating into the bales.

When the tailgate 18 is closed after ejecting a completed bale, the hydraulic cylinders 68 are contracted and this is accomplished by means of the springs 63 which urge pressure fluid from below the plungers of the cylinders 68 past the shut off valve, on the one hand, in part via the by-pass and incorporated check valve into the plunger sides of these cylinders 68 and, on the other hand, in part back to the reservoir. This results in the take up arms 56 returning to their bale starting position of Fig. 1. The resetting of the hydraulic tensioning means indeed is accomplished by the springs 63 in as much as the hydraulic tensioning means do not include a powered pressure source.

Should servicing of the apron belts 42 become necessary, then the tailgate 18 is raised whereby, by virtue of, on the one hand, the cross shaft 58 of the apron tensioning mechanism being provided on the main frame 12; the anchorage points of the apron tensioning cylinders 68 being provided on the tailgate 18 and the relative positioning of the lever arms 70 and said tensioning cylinders 68 and, on the other hand, the apron belts 42 extending around rollers 54 and 40 positioned on the main frame 12 at locations forwardly of the tailgate pivots 20, the tensioning cylinders 68 are caused to extend and thus, pressure fluid is caused to enter the cylinder sides of these cylinders 68. Next, the operator closes the aforementioned shut off valve whereby, upon subsequent lowering of the tailgate 18, contraction of the apron tensioning control cylinders 68 is prevented. This, in turn, results in the take up arms 56 becoming blocked and inoperative and thus, in the apron belts becoming loose, i.e. the apron tension being fully released, which is highly desirable and normally even required for servicing these apron belts.

## Claims

1. A round baler (10) having, on the one hand, bale forming apron means (41) comprising an inner course (42a) defining, at least in part, a bale forming chamber which, in use, is expandable from a bale starting chamber (64) to a full sized bale chamber; said apron inner course (42a) being extensible to accommodate, at least in part, for said bale chamber expansion and, on the other hand, means (56, 63, 68) for tensioning the apron means (41) during bale formation; said apron tensioning means (56, 63, 68) comprising :
- a single take up apparatus (56-62, 70) cooperable with the apron means (41) and movable, during said bale formation, from a bale starting position to a full sized bale position for permitting said extension of the apron inner course (42a),
- resisting means cooperable with the take up apparatus (56-62, 70) for, during said bale formation, subjecting said apparatus to a resistance torque when moving from said bale starting position to said full sized bale position to thereby induce tension in the apron means (41); said resisting means including hydraulic cylinder means (68) incorporated in a hydraulic circuitry also comprising adjustable relief valve means, and
- spring means (63) cooperable with the take up apparatus (56-62, 70) for, during said bale formation, applying a spring torque thereon which, while permitting said apparatus to move toward the full sized bale position, urges this apparatus toward the bale starting position to thereby induce additional tension in the apron means (41), and
characterized in that, during substantially the entire movement of the take up apparatus (56-62, 70) from the bale starting position to the full sized bale position :
- the resisting means cooperate with the take up apparatus (56-62, 70) in a manner so that said resistance torque applied on the take up apparatus (56-62, 70) and the tension generated thereby in the apron means (41) increase, and
- the spring means (63) cooperate with the take up apparatus (56-62, 70) in a manner so that said spring torque applied on the take up apparatus (56-62, 70) and the additional tension generated thereby in the apron means (41) remain substantially constant.

2. A round baler (10) according to claim 1, characterized in that, during operation, the resisting means provide a primary source of tension in the apron means (41) while the spring means (63) provide a secondary source of tension in said apron means (41).

3. A round baler (10) according to claim 1 or 2, characterized in that the take up apparatus (56-62, 70) comprises :
- a pair of arms (56) pivotally mounted on the baler (10) by a common pivot shaft (58) and carrying guide means (60, 62) for the apron means (41), and
- first and second lever means (59, 70) connected at one of their ends to said common pivot shaft (58) and at their other ends to respectively said spring means (63) and said resisting means (68).

4. A round baler (10) according to claim 3 and comprising a main frame (12) and a tailgate (18) pivotally connected to said main frame (12); said baler (10) being characterized in that :
- the take up apparatus (56-62, 70) is pivotally mounted on the main frame (12),
- the spring means (63) are connected between said first lever means (59) of the take up apparatus (56-62, 70) and said tailgate (18) for normally urging said take up apparatus (56-62, 70) toward said bale starting position, and
- the hydraulic cylinder means (68) are connected between said second lever means (70) of the take up apparatus (56-62, 70) and said tailgate (18) for resisting movement of said take up apparatus (56-62, 70) from said bale starting position to said full sized bale position.

5. A round baler (10) according to claim 4, characterized in that the hydraulic circuitry including said cylinder means (68) further also comprises shut-off valve means which, when closed, prevent drainage of hydraulic pressure fluid from said cylinder means (68).

6. A round baler (10) according to any of the claims 3 to 5, characterized in that :
- the first lever means comprise a pair of first levers (59) connected at one of their ends to said common pivot shaft (58) at opposite sides of the baler (10),
- the second lever means also comprise a pair of second levers (70) equally connected at one of their ends to said common pivot shaft (58) at opposite sides of the baler (10),
- the spring means comprise a pair of springs (63), each having one end thereof connected to one of said first levers (59) and the other end thereof connected to a corresponding side wall of the baler (10), and
- the hydraulic cylinder means comprise a pair of hydraulic cylinders (68), each having one end thereof connected to one of said second levers (70) and the other end thereof connected to a corresponding side wall of the baler (10).

7. A round baler (10) according to claim 6, characterized in that, during substantially the entire pivotal movement of the take up apparatus (56-62, 70) from its bale starting position to its full sized bale position :
- the effective torque arm of the spring force applied by each spring (63) on said take up apparatus (56-62, 70) shortens while the spring force itself increases; the arrangement being so that the counteracting effects thereof substantially compensate each other whereby the effective spring torque applied by each said spring (63) on the take up apparatus (56-62, 70) remains substantially constant during bale formation, and
- the effective torque arm of the resistance applied by each hydraulic cylinder (68) on said take up apparatus (56-62, 70) lengthens while the resistance itself remains substantially constant whereby the effective resistance torque applied by each said hydraulic cylinder (68) on the take up apparatus (56-62, 70) increases during bale formation.

8. A round baler (10) according to any of the preceding claims, characterized in that it further also comprises a sledge assembly (29) including a plurality of rollers (30, 32, 34); said sledge assembly (29) being mounted for movement between a bale starting position and a full bale position and cooperable with the inner course (42a) of the apron means (41) for defining said bale forming chamber therebetween.

## Patentansprüche

1. Rundballenpresse (10), die einerseits einen Ballen formende Umschlingungseinrichtungen (41) mit einem inneren Strang (42a) aufweist, der zumindestens teilweise eine Ballenformungskammer umgrenzt, die im Betrieb ausgehend von einer Ballenanfangskammer (64) auf eine einem Ballen voller Größe entsprechende Kammer ausdehnbar ist, wobei der innere Strang (42a) der Umschlingungseinrichtungen verlängerbar ist, um zumindestens teilweise diese Ausdehnung der Ballenkammer zu ermöglichen, und die andererseits Einrichtungen (56,63,68) zum Spannen der Umschlingungseinrichtungen (41) während der Ballenformung aufweist, wobei die Umschlingungseinrichtungs-Spanneinrichtungen (56,63,68) folgende Teile umfassen:
- eine einzige Spannvorrichtung (56-62,70), die mit den Umschlingungseinrichtungen (41) zusammenwirken kann und die während der Ballenformung von einer Ballenanfangsstellung auf die einem Ballen voller Größe entsprechende Stellung beweglich ist, um die Verlängerung des inneren Stranges (42a) der Umschlingungseinrichtungen zu ermöglichen,
- Gegenwirkungseinrichtungen, die mit der Spannvorrichtung (56-62,70) zusammenwirken können, um während der Ballenformung diese Spannvorrichtung einem Gegenwirkungs-Drehmoment auszusetzen, wenn sie sich von der Ballenanfangsstellung zu der einem Ballen voller Größe entsprechenden Stellung bewegt, um auf diese Weise eine Spannung in den Umschlingungseinrichtungen (41) hervorzurufen, wobei die Gegenwirkungseinrichtungen Hydraulikzylindereinrichtungen (68) einschließen, die in eine Hydraulikschaltung eingefügt sind, die weiterhin einstellbare Entlastungsventileinrichtungen umfaßt, und
- Federelemente (63), die mit der Spannvorrichtung (56-62, 70) zusammenwirken können, um während der Ballenformung ein Feder-Drehmoment auf die Spannvorrichtung auszuüben, das, während es der Spannvorrichtung eine Bewegung in Richtung auf die einem Ballen voller Größe entsprechende Stellung ermöglicht, diese Spannvorrichtung in Richtung auf die Ballenanfangsstellung drückt, um auf diese Weise ein zusätzliche Spannung in den Umschlingungseinrichtungen hervorzurufen,
dadurch gekennzeichnet, daß während im wesentlichen der gesamten Bewegung der Spannvorrichtung (56-62,70) von der Ballenanfangsstellung zu der einem Ballen voller Größe entsprechenden Stellung:
- die Gegenwirkungseinrichtungen mit der Spannvorrichtung (56-62,70) derart zusammenwirken, daß das Gegenwirkungsmoment, das auf die Spannvorrichtung (56-62,70) ausgeübt wird, und die hierdurch in den Umschlingungseinrichtungen erzeugte Spannung ansteigen, und
- die Federelemente (63) mit der Spannvorrichtung (56-62,70) derart zusammenwirken, daß das auf die Spannvorrichtung (56-62, 70) ausgeübte Feder-Drehmoment und die hierdurch in den Umschlingungseinrichtungen (41) erzeugte Spannung im wesentlichen konstant bleibt.

2. Rundballenpresse (10) nach Anspruch 1,
dadurch gekennzeichnet, daß im Betrieb die Gegenwirkungseinrichtungen eine primäre Quelle der Spannung in den Umschlingungseinrichtungen (41) bilden, während die Federelemente (63) eine sekundäre Quelle der Spannung in den Umschlingungseinrichtungen (41) bilden.

3. Rundballenpresse (10) nach Anspruch 1 oder 2,
dadurch gekennzeichnet, daß die Spannvorrichtung (56-62,70) folgende Teile umfaßt:
- zwei Arme (56), die schwenkbar auf der Ballenpresse (10) über eine gemeinsame Schwenkwelle (58) befestigt sind und Führungseinrichtungen (60,62) für die Umschlingungseinrichtungen (41) tragen, und
- erste und zweite Hebeleinrichtungen (59,70), die mit einem ihrer Enden mit der gemeinsamen Schwenkwelle (58) und an ihrem anderen Ende mit den Federelementen (63) bzw. den Gegenwirkungseinrichtungen (68) verbunden sind.

4. Rundballenpresse (10) nach Anspruch 3, mit einem Hauptrahmen (12) und einer Heckklappe (18), die schwenkbar an dem Hauptrahmen (12) befestigt ist, wobei die Ballenpresse (10) dadurch gekennzeichnet ist, daß:
- die Spannvorrichtung (56-62,70) schwenkbar auf dem Hauptrahmen (12) befestigt ist,
- die Federelemente (63) zwischen den ersten Hebeleinrichtungen (59) der Spannvorrichtung (56-62,70) und der Heckklappe (18) angeschlossen sind, um normalerweise die Spannvorrichtung (56-62,70) in Richtung auf die Ballenanfangsstellung zu drücken, und
- die Hydraulikzylindereinrichtungen (68) zwischen den zweiten Hebeleinrichtungen (70) der Spannvorrichtung (56-62,70) und der Heckklappe (18) angeschlossen sind, um der Bewegung der Spannvorrichtung (56-62,70) von der Ballenanfangsstellung in die einem Ballen voller Größe entsprechende Stellung entgegenzuwirken.

5. Rundballenpresse (10) nach Anspruch 4,
dadurch gekennzeichnet, daß die die Zylindereinrichtungen (68) enthaltene Hydraulikschaltung weiterhin Absperrventileinrichtungen umfaßt, die im geschlossenen Zustand ein Ausströmen der hydraulischen Druckflüssigkeit aus den Zylindereinrichtungen (68) verhindern.

6. Rundballenpresse (10) nach einem der Ansprüche 3 - 5, dadurch gekennzeichnet, daß:
- die ersten Hebeleinrichtungen zwei erste Hebel (59) umfassen, die an einem ihrer Enden mit der gemeinsamen Schwenkwelle (58) an gegenüberliegenden Seiten der Ballenpresse (10) verbunden sind,
- die zweiten Hebeleinrichtungen ebenfalls zwei zweite Hebel (70) umfassen, die in gleicher Weise mit ihrem einen Ende mit der gemeinsamen Schwenkwelle (58) an gegenüberliegenden Seiten der Ballenpresse (10) verbunden sind,
- die Federelemente zwei Federn (63) umfassen, die jeweils mit einem Ende mit einem der ersten Hebel (59) verbunden sind, während ihre anderen Enden mit einer entsprechenden Seitenwand der Ballenpresse (10) verbunden sind, und
- die Hydraulikzylindereinrichtungen zwei Hydraulikzylinder (68) umfassen, die jeweils mit einem Ende mit einem der zweiten Hebel (70) verbunden sind, während ihre anderen Enden mit einer entsprechenden Seitenwand der Ballenpresse (10) verbunden sind.

7. Rundballenpresse (10) nach Anspruch 6,
dadurch gekennzeichnet, daß im wesentlichen während der gesamten Schwenkbewegung der Spannvorrichtung (56-62,70) von der Ballenanfangsstellung auf die einem Ballen voller Größe entsprechende Stellung:
- der wirksame Drehmomentarm der von jeder Feder (63) auf die Spannvorrichtung (56-62,70) ausgeübten Federkraft sich verkürzt, während die Federkraft selbst ansteigt, wobei die Anordnung derart ist, daß die einander gegenwirkenden Auswirkungen hiervon einander im wesentlichen kompensieren, so daß das wirksame Federdrehmoment, daß von jeder der Federn (63) auf die Spannvorrichtung (56-62,70) ausgeübt wird, während der Ballenformung im wesentlichen konstant bleibt, und
- der wirksame Drehmomentarm der von jedem Hydraulikzylinder (68) auf die Spannvorrichtung (56-62,70) ausgeübten Gegenwirkung sich verlängert, während die Gegenwirkungskraft selbst im wesentlichen konstant bleibt, so daß das wirksame Gegenwirkungsdrehmoment, das von jedem der Hydraulikzylinder (68) auf die Spannvorrichtung (56-62,70) ausgeübt wird, während der Ballenformung ansteigt.

8. Rundballenpresse (10) nach einem der vorhergehenden Ansprüche,
dadurch gekennzeichnet, daß sie weiterhin eine Schlittenbaugruppe (29) aufweist, die eine vielzahl von Walzen (30,32,34) einschließt, wobei die Schlittenbaugruppe (69) für eine Bewegung zwischen der Ballenanfangsstellung und einer einem Ballen voller Größe entsprechenden Stellung beweglich ist und mit dem inneren Strang (42a) der Umschlingungseinrichtungen (41) zusammenwirkt, um zwischen diesen Teilen die Ballenformungskammer zu umgrenzen.

## Revendications

1. Ramasseuse-presse à balles rondes (10) équipée, d'une part, de moyens formant tapis de formage de balle (41) qui possèdent un brin intérieur (42a) définissant, au moins en partie, une chambre de formage de balle qui, en service, est extensible d'une chambre de démarrage de balle (64) à une chambre de balle de dimensions finies; ledit brin intérieur (42a) du tapis étant extensible pour permettre, au moins en partie, l'extension de ladite chambre à balle et, d'autre part, des moyens (56, 63, 68) pour tendre les moyens formant tapis (41) pendant la formation d'une balle; lesdits moyens de tension de tapis (56, 63, 68) comportant :
- un dispositif releveur unique (56-62, 70) apte à coopérer avec les moyens formant tapis (41) et mobile, pendant la formation de ladite balle, d'une position de démarrage de balle à une position de balle de dimensions finies pour permettre ladite extension du brin intérieur (42a) du tapis,
- des moyens de résistance aptes à coopérer avec le dispositif releveur (56-62, 70) pour, pendant la formation de ladite balle, soumettre ledit dispositif à un couple de résistance lors de son déplacement de ladite position de démarrage de balle à ladite position de balle de dimensions finies, pour ainsi induire une tension dans les moyens formant tapis (41); lesdits moyens de résistance comportant des moyens formant vérins hydrauliques (68) incorporés dans un ensemble de circuits hydrauliques qui comprend également des moyens formant soupape de détente ajustable, et
- des moyens élastiques (63) aptes à coopérer avec le dispositif releveur (56-62, 70) pour, pendant la formation de ladite balle, appliquer sur celui-ci un couple élastique qui, tout en permettant audit dispositif de se déplacer en direction de la position de balle de dimensions finies, sollicite ce dispositif en direction de la position de démarrage de balle pour ainsi induire une tension supplémentaire dans les moyens formant tapis (41), et
caractérisée en ce que, pendant sensiblement la totalité du déplacement du dispositif releveur (56-62, 70) de la position de démarrage de balle à la position de balle de dimensions finies :
- les moyens de résistance coopèrent avec le dispositif releveur (56-62, 70) de façon que ledit couple de résistance appliqué sur le dispositif releveur (56-62, 70) et la tension ainsi générée dans les moyens formant tapis (41) augmentent, et
- les moyens élastiques (63) coopèrent avec le dispositif releveur (56-62, 70) de façon que ledit couple élastique appliqué sur le dispositif releveur (56-62, 70) et la tension supplémentaire ainsi générée dans les moyens formant tapis (41) restent sensiblement constants.

2. Ramasseuse-presse à balles rondes (10) selon la revendication 1, caractérisée en ce qu'en cours de fonctionnement, les moyens de résistance définissent une source de tension primaire dans les moyens formant tapis (41), tandis que les moyens élastiques (63) définissent une source de tension secondaire dans lesdits moyens formant tapis (41).

3. Ramasseuse-presse à balles rondes (10) selon la revendication 1 ou 2, caractérisée en ce que le dispositif releveur (56-62, 70) comporte :
- deux bras (56) montés pivotants sur la ramasseusepresse (10) au moyen d'un arbre de pivotement commun (58) et portant des moyens de guidage (60, 62) pour les moyens formant tapis (41), et
- des premiers et seconds moyens formant leviers (59, 70) accouplés, au niveau de l'une de leurs extrémités, avec ledit arbre de pivotement commun (58) et, au niveau de leurs autres extrémités, respectivement avec lesdits moyens élastiques (63) et lesdits moyens de résistance (68).

4. Ramasseuse-presse à balles rondes (10) selon la revendication 3 et comportant un châssis principal (12) et une ridelle arrière (18) reliée d'une manière pivotante audit châssis principal (12), ladite ramasseuse-presse (10) étant caractérisée en ce que :
- le dispositif releveur (56-62, 70) est monté pivotant sur le châssis principal (12),
- les moyens élastiques (63) sont montés entre lesdits premiers moyens formant levier (59) du dispositif releveur (56-62, 70) et ladite ridelle arrière (18) pour normalement solliciter ledit dispositif releveur (56-62, 70) en direction de ladite position de démarrage de balle, et
- les moyens formant vérins hydrauliques (68) sont montés entre lesdits seconds moyens formant levier (70) du dispositif releveur (56-62, 70) et ladite ridelle arrière (18) pour résister au déplacement dudit dispositif releveur (56-62, 70) de ladite position de démarrage de balle à ladite position de balle de dimensions finies.

5. Ramasseuse-presse à balles rondes (10) selon la revendication 4, caractérisée en ce que l'ensemble des circuits hydrauliques qui comporte lesdits moyens formant vérins (68) comporte aussi, en outre, des moyens formant vanne d'arrêt qui, lorsqu'ils sont fermés, empêchent une évacuation d'un fluide sous pression hydraulique hors des moyens formant vérins (68).

6. Ramasseuse-presse à balles rondes (10) selon l'une quelconque des revendications 3 à 5, caractérisée en ce que :
- les premiers moyens formant leviers comportent deux premiers leviers (59) reliés, au niveau de l'une de leurs extrémités, audit arbre de pivotement commun (58) au niveau de côtés opposés de la ramasseuse-presse (10),
- les seconds moyens formant leviers comportent également deux seconds leviers (70) qui sont eux-aussi reliés, au niveau de l'une de leurs extrémités, audit arbre de pivotement commun (58) au niveau de côtés opposés de la ramasseuse-presse (10),
- les moyens élastiques comportent deux ressorts (63) dont chacun a l'une de ses extrémités reliée à l'un desdits premiers leviers (59), et son autre extrémité reliée à une paroi latérale correspondante de la ramasseuse-presse (10), et
- les moyens formant vérins hydrauliques comportent deux vérins hydrauliques (68) dont chacun a l'une de ses extrémités reliée à l'un desdits seconds leviers (70), et son autre extrémité reliée à une paroi latérale correspondante de la ramasseuse-presse (10).

7. Ramasseuse-presse à balles rondes (10) selon la revendication 6, caractérisée en ce que, pendant sensiblement la totalité du mouvement de pivotement du dispositif releveur (56-62, 70) de sa position de démarrage de balle à sa position de balle de dimensions finies :
- le bras de levier du couple effectif de la force élastique appliquée par chacun des ressorts (63) sur ledit dispositif releveur (56-62, 70) raccourcit, tandis que la force élastique proprement dite augmente; la conception étant telle que les effets antagonistes de ceux-ci se compensent sensiblement mutuellement, moyennant quoi, le couple élastique effectif appliqué par chacun desdits ressorts (63) sur le dispositif releveur (56-62, 70) reste sensiblement constant pendant la formation d'une balle, et
- le bras de levier du couple effectif de la résistance appliquée par chacun des vérins hydrauliques (68) sur ledit dispositif releveur (56-62, 70) s'allonge, tandis que la résistance proprement dite reste sensiblement constante, moyennant quoi, le couple de résistance effectif appliqué par chacun desdits vérins hydrauliques (68) sur le dispositif releveur (56-62, 70) augmente pendant la formation d'une balle.

8. Ramasseuse-presse à balles rondes (10) selon l'une quelconque des revendications précédentes, caractérisée en ce qu'elle comporte également, de surcroît, un ensemble presseur (29) qui comprend plusieurs rouleaux (30, 32, 34); ledit ensemble presseur (29) étant monté pour se déplacer entre une position de démarrage de balle et une position de balle finie et apte à coopérer avec le brin intérieur (42a) des moyens formant tapis (41) pour définir entre eux ladite chambre de formage de balle.
